Europäisches Patentamt

(19) European Patent Office

Office européen des brevets

(11) Numéro de publication: **0 211 740**
**B1**

(12) **FASCICULE DE BREVET EUROPÉEN**

(45) Date de publication du fascicule du brevet:
**13.09.89**

(21) Numéro de dépôt: **86401622.5**

(22) Date de dépôt: **21.07.86**

(51) Int. Cl.⁴: **B 64 C 27/32**

(54) **Mât-moyeu intégré et téte de rotor de giravion le comportant.**

(30) Priorité: **22.07.85 FR 8511158**

(43) Date de publication de la demande:
**25.02.87 Bulletin 87/9**

(45) Mention de la délivrance du brevet:
**13.09.89 Bulletin 89/37**

(84) Etats contractants désignés:
**DE GB IT**

㊼ Documents cité·
**EP-A-0 085 127**
**FR-A-2 192 942**
**FR-A-2 427 251**
**FR-A-2 457 804**
**GB-A-2 136 377**
**US-A-3 322 200**

(73) Titulaire: **AEROSPATIALE Société Nationale Industrielle, 37, Boulevard de Montmorency, F-75781 Paris Cédex 16 (FR)**

(72) Inventeur: **Mouille, René Louis, Villa la Pinède Le Coton Rouge, F-13100 Aix en Provence (FR)**
Inventeur: **Leman, Jean- Luc, Le Bel Ormeau Bâtiment C3 Avenue J.P. Coste, F-13100 Aix en Provence (FR)**

(74) Mandataire: **Lepeudry- Gautherat, Thérèse, ARMENGAUD JEUNE CABINET LEPEUDRY 6, rue du Fg. St- Honoré, F-75008 Paris (FR)**

## Description

La présente invention concerne les rotors de giravions, et elle a plus précisément pour objet un mât-moyeu intégré, ainsi qu'une tête de rotor comportant ce mât-moyeu intégré et destinée en particulier à l'équipement des hélicoptères.

On a déjà décrit, dans le brevet français n° 2 427 251 et dans son premier certificat d'addition n° 2 456 034, ainsi que dans la demande de brevet français n° 8 122 072 (FR-A-2 516 891), des têtes de rotors principaux ou de rotors arrière pour hélicoptères qui comportent un mât et un corps de moyeu pouvant être intégrés sous la forme d'une pièce monobloc réalisée en un matériau métallique ou composite.

Les rotors d'hélicoptères décrits dans ces documents comportent chacun un corps central de moyeu rigide, auquel le pied de chaque pale du rotor est accouplé par l'intermédiaire d'une butée sphérique lamifiée et d'un amortisseur de traînée, ou d'une contre-fiche de rappel élastique en traînée avec amortissement incorporé.

La butée sphérique lamifiée qui constitue une articulation autorisant les mouvements de la pale correspondante autour de ses trois axes de battement, de traînée et de commande de l'incidence, comporte une partie centrale lamifiée, formée d'un empilement alterné de calottes sphériques d'un matériau rigide et d'un matériau visco-élastique et travaillant en compression et cisaillement entre une armature externe solidaire du moyeu et une armature interne fixée à un organe de liaison à la pale.

L'amortisseur de traînée, qui peut être hydraulique mais qui, de préférence, est constitué d'un empilement alterné de plaques rigides et de plaques d'un matériau visco-élastique, ou de tubes coaxiaux entre lesquels est incorporé un manchon cylindrique en un matériau élastique, a ses extrémités accouplées par des rotules au pied de la pale correspondante et en un point du moyeu, de sorte que pour les mouvements angulaires de la pale en traînée, il assure un énergique rappel élastique sur l'axe neutre en introduisant simultanément un certain amortissement de ces mouvements.

Dans le brevet français n° 2 427 251, le corps central du moyeu a la forme d'un plateau ou d'un anneau plat, de pourtour polygonal convexe ou sensiblement circulaire, s'étendant sensiblement radialement par rapport à l'axe de rotation du rotor, qui est confondu avec l'axe du mât-rotor supportant le moyeu, et ce plateau est traversé, dans la direction de l'axe du rotor, par autant d'ouvertures ou alvéoles que le rotor comporte de pales. Une butée sphérique lamifiée est montée en appui par son armature externe contre le bord extérieur de chaque ouverture, tandis que son armature interne est fixée aux extrémités internes des branches d'une pièce fourchue solidaire du pied de la pale correspondante, et le point du pourtour du moyeu, auquel l'amortisseur de traînée correspondant est accouplé par une rotule, est situé entre la butée sphérique lamifiée correspondante et celle de la pale immédiatement précédente ou suivante de la pale correspondante, dans le sens de rotation du rotor. De plus, un levier de commande de l'incidence de la pale correspondante est fixé à la pièce fourchue, du côté opposé à l'amortisseur de traînée correspondant, et, enfin, dans le cas d'un rotor principal, la branche inférieure de la pièce fourchue porte, sous son extrémité interne, une butée limitant le battement de la pale correspondante vers le bas, par la coopération avec un anneau réciproque monté coulissant radialement autour du mât-rotor, en-dessous du moyeu, de sorte que la butée vienne s'appuyer contre l'anneau réciproque aux faibles vitesses de rotation et à l'arrêt du rotor.

La pièce fourchue peut être constituée par un prolongement du pied de la pale correspondante, ou encore par une chape radiale à l'extrémité interne d'un organe rapporté de liaison au pied de la pale correspondante, les deux branches de cette chape d'extrémité interne ou de ce prolongement étant fixées à l'armature interne de la butée sphérique lamifiée correspondante par deux boulons. Dans le cas de l'utilisation d'un organe rapporté de liaison au pied de la pale, cet organe présente également à son extrémité externe, une autre chape par laquelle il est assujetti au pied de la pale correspondante par deux axes sensiblement perpendiculaires au plan du rotor, et dont l'un est amovible pour permettre de replier la pale dans le plan du rotor par pivotement autour de l'autre axe.

Afin d'intégrer, éventuellement, dans le rotor un dispositif de repliage automatique des pales, il a été proposé que cet organe rapporté de liaison soit conformé en manchon, dont une partie cylindrique permet de loger ce dispositif, et qui sert également à fixer le levier de commande de l'incidence de la pale correspondante, l'amortisseur de traînée correspondant, et la butée basse coopérant avec l'anneau réciproque.

Dans le but d'éliminer tous les problèmes potentiels qui résultent d'une liaison boulonnée du moyeu sur le mât-rotor, tels que la corrosion sous tension ou le desserrage des boulons, le corps central du moyeu et le mat peuvent être intégrés, et il a été proposé que le corps central rigide du moyeu constitue avec le mât du rotor, une pièce métallique monobloc, par exemple en acier ou en titane et venue de forge ou de matriçage. Cependant, afin de diminuer la vulnérabilité, la masse et le coût d'un tel mât-moyeu intégré, ce dernier peut être réalisé en matériaux composites, par empilage ou drapage de plis de tissus de fibres synthétiques ou minérales à haute résistance mécanique qui sont pré-imprégnés et agglomérés par une résine synthétique ultérieurement polymérisée et durcie. Dans ce dernier cas, afin de donner un bon caractère "fail-safe" au mât-moyeu intégré, une ceinture de structure composite est avantageusement bobinée autour du plateau de moyeu.

Les rotors décrits dans le premier certificat d'addition n° 2 456 034 au brevet français mentionné ci-dessus se distinguent essentiellement de ceux qui font l'objet de ce brevet principal par le fait que leur corps de moyeu comporte un fût central, prolongeant le mât du rotor, et portant un plateau supérieur et un plateau inférieur, l'armature externe de chaque butée sphérique lamifiée étant encastrée entre et fixée directement aux bords des deux plateaux, à la façon d'une entretoise rigide, et le pied de la pale correspondante étant réuni à l'armature interne de la butée sphérique lamifiée par une chape radiale et évidée pour le libre passage de la butée sphérique. De plus, il a été proposé dans ce Certificat d'addition, que l'ensemble du moyeu, notamment son fût et ses deux plateaux, forme, avec la partie supérieure du mât-rotor, une pièce monobloc, par exemple métallique et venue de forge ou de matriçage. Par analogie avec les développements proposés des rotors décrits dans le brevet principal, on peut envisager de réaliser, pour l'équipement de rotors selon le certificat d'addition mentionné ci-dessus, un mât-moyeu intégré à deux plateaux sensiblement radiaux et en une structure composite. Il est à noter qu'une telle réalisation irait bien au-delà, dans le sens de la diminution du nombre des pièces et de la suppression des liaisons, des réalisations de rotors décrites dans la demande de brevet français n° 2 529 860, et qui comprennent deux plateaux en matériaux composites fixés à une entretoise métallique, qui les sépare, et sur la partie supérieure du mât-rotor métallique par des boulons, dans une architecture de base identique à celle des rotors décrits dans la demande de brevet français n° 8 122 027 et se distinguant essentiellement des rotors du certificat d'addition mentionné ci-dessus par le fait que le pied de chaque pale présente une boucle qui entoure directement la butée sphérique lamifiée correspondante et est fixée à l'armature interne de cette dernière.

Enfin, on connaît par le FR-A-2 457 804 une tête de rotor comprenant pour chaque pale, un palier en élastomère intermédiaire entre la pale et le corps de moyeu.

Cependant, la fabrication du moyeu et du mât des rotors décrits dans tous les documents mentionnés ci-dessus sous la forme d'un mât-moyeu intégré, s'avère toujours délicate, difficile et coûteuse, que cette pièce monobloc soit métallique ou en matériaux composites, et qu'elle comporte un seul plateau radial à alvéoles ou deux plateaux radiaux sans alvéoles. En effet, le mât-moyeu intégré doit présenter, du côté opposé à son pied par lequel il est entraîné en rotation, une ou deux parties épanouies en corolle, formant le ou les plateaux de moyeu. Dans une réalisation métallique, le matriçage de cette ou ces parties en corolle est une opération relativement simple. Par contre, la réalisation d'une telle pièce en composite est très difficile, car elle est, en usage, très chargée en flexion et en cisaillement, et, de plus, sa forme concave ou doublement concave rend également sa fabrication très complexe, quel que soit le procédé utilisé. En particulier, la réalisation d'une partie épanouie en corolle pour former un plateau de moyeu pose de nombreux problèmes, notamment en ce qui concerne les variations d'épaisseur entre la partie formant le mât et la partie formant le plateau de moyeu, qui doivent être obtenues en assurant simultanément des changements d'environ 90° de l'orientation des fibres à haute résistance mécanique et l'empilage ou le drapage sans formation de pli des couches de tissus de fibres dans cette zone doublement évolutive (présentant des courbures dans deux directions sensiblement perpendiculaires), qui posent un problème lié au foisonnement des tissus.

Par la présente invention, on se propose de remédier à ces inconvénients majeurs, et l'invention a pour objet un mât-moyeu intégré présentant à la fois une structure simplifée et plus légère, une sécurité et une fiabilité améliorées, et pouvant être fabriqué en métal ou en matériau composite d'une manière plus simple, plus économique et plus fiable.

L'invention a donc pour objet un mât-moyeu intégré, dont la masse est plus faible et dont la durée de vie est augmentée et la maintenance simplifiée, ce qui permet d'abaisser les coûts directs en opération.

L'invention a de plus pour objet un mât-moyeu intégré, dont la structure est avantageusement adaptée à une réalisation en matériaux composites, afin qu'il présente un bon caractère "fail-safe".

Par rapport à l'état de la technique connu par exemple du FR-A-2 457 804 qui décrit déjà un mât moyeu intégré, du type comportant une partie tubulaire formant un mât, dont une extrémité est conformée en pied par lequel le mât-moyeu est destiné, d'une part, à être relié à la partie supérieure de la boîte de transmission de l'hélicoptère, pour transférer au fuselage les efforts et moments en provenance du rotor et, d'autre part, à être entraîné en rotation autour de l'axe de la partie formant mât, laquelle est solidaire du côté opposé au pied, d'une partie formant un corps de moyeu coaxial à la partie formant mât et destiné à être relié à des pales de rotor par l'intermédiaire d'un palier élastique, l'invention se caractérise en ce que la partie formant corps de moyeu est également une partie tubulaire qui prolonge la partie formant mât, en ce que des paires d'ouvertures, en nombre égal au nombre des pales du rotor, sont pratiquées dans la partie formant corps de moyeu et sont régulièrement réparties en direction circonférentielle sur le pourtour de cette partie formant corps de moyeu, les deux ouvertures de chaque paire étant axialement espacées l'une de l'autre, en ce qu'une ceinture de renfort est assujettie à la face interne ou externe de cette partie formant corps de moyeu entre les deux ouvertures de chaque paire, et en ce que le pied de chaque pale est conformé en partie d'attaches de fourches à deux branches superposées dont la branche supérieure traverse l'ouverture supérieure et la branche inférieure traverse l'ouverture inférieure, les extrémités radiales internes des deux branches étant fixées contre l'armature interne d'une butée sphérique qui est appliquée contre la ceinture ou contre la face interne de la partie formant corps de moyeu au droit de la ceinture. La forme générale d'un tel mât-moyeu intégré est bien mieux adaptée à une réalisation en matériaux composites que les formes connues de l'état de la technique, car elle permet de solliciter et de faire travailler ces matériaux composites dans le sens des fibres, en minimisant le cisaillement induit, du fait de la nature des efforts reçus au niveau de la partie formant corps de moyeu et transmis par le mât-moyeu jusqu'au pied de la partie formant mât. Ces efforts sont les efforts centrifuges, qui s'exercent sur les pales du rotor, ainsi que les efforts verticaux de battement et les efforts de traînée des pales, qui induisent respectivement un moment et un couple que le mât-moyeu transmet jusqu'à son pied par un chemin bien plus direct que dans les réalisations du mât-moyeu intégré de l'état de la technique.

De préférence, les extrémités en direction circonférentielle des ouvertures d'une part les plus proches et d'autre part les plus éloignées de la partie formant mât se trouvent sensiblement et respectivement dans un premier et dans un second plan transversal perpendiculaire à l'axe du mât-moyeu, et la ceinture de renfort est fixée contre la bande annulaire délimitée sur la face interne ou externe de la partie formant corps de moyeu entre le premier et le second plan transversal.

Avantageusement, les deux ouvertures de chaque paire ont sensiblement une forme de haricot et présentent leur concavité tournée l'une vers l'autre.

Dans une forme avantagetuse de réalisation, qui facilite la fabrication du mât-moyeu, la partie formant mât et la partie formant corps de moyeu sont constituées par une unique pièce tubulaire à symétrie de révolution, et les deux ouvertures de chaque paire d'ouvertures sont symétriques l'une de l'autre par rapport à un plan médian de la ceinture de renfort qui est perpendiculaire à l'axe du mât-moyeu.

Afin que la ceinture présente une excellente rigidité, lui permettant de prendre en charge les efforts centrifuges en provenance des pales d'un rotor équipé de la manière décrite ci-dessus d'un tel mât-moyeu, la ceinture de renfort présente une surface latérale externe sensiblement en forme d'anneau circulaire et une surface latérale interne sensiblement en forme d'anneau de section polygonale.

Avantageusement, au moins la partie formant mât présente une forme générale extérieure sensiblement tronconique divergeant du pied de cette partie vers la partie formant corps de moyeu, pour que le diamètre du pied du mât-moyeu puisse être adapté à un dispositif d'entraînement et de montage en rotation comportant au moins un roulement dont la taille est relativement importante sans être prohibitive.

La disposition générale d'un tel mât-moyeu intégré est particulièrement intéressante pour une réalisation en matériau composite à fibres de haute résistance mécanique agglomérées par une résine synthétique durcie, et, dans ce cas, la ceinture est en composite et avantageusement réalisée d'une seule pièce avec la partie formant moyeu, qui présente une forme générale extérieure sensiblement convexe.

Cependant, il est possible que les parties formant mât et corps de moyeu soient métalliques, la partie formant corps de moyeu présentant une forme générale extérieure sensiblement cylindrique ou tronconique divergeant vers son extrémité libre opposée à la partie formant mât, afin de permettre la mise en place de la ceinture, composite ou métallique, à l'intérieur du mât-moyeu ou autour de ce dernier.

Mais une telle réalisation métallique présente de moindres avantages, en termes de poids, de coût et de résistance à l'effet d'entaille (caractère "fail-safe") qu'une réalisation en composite, qui, dans un mode de réalisation préféré, est telle que la partie formant corps de moyeu présente sensiblement la forme d'un tonneau de diamètre maximal au niveau de la ceinture. Un tel mât-moyeu, dont la forme est avantageuse pour des considérations de traînée aérodynamique, se prête facilement à la fabrication en composite à fibres de carbone ou de Kevlar®, soit par bobinage de stratifils de ces matériaux pré-imprégnés d'une résine époxyde qui est ensuite polymérisée et durcie, soit par drapage de tissus de fibres de ces matériaux préimprégnés d'une résine époxyde, puis moulage sous pression et polymérisation à chaud de la résine, les ouvertures étant ultérieurement usinées dans le mât-moyeu.

Afin de disposer d'une butée basse pour limiter les battements vers le bas des pales d'un rotor équipé de ce mât-moyeu, un anneau réciproque rigide est monté latéralement coulissant dans un logement circulaire en forme de U s'ouvrant radialement vers l'extérieur et maintenu par un support coaxialement au mât-moyeu et à l'intérieur de ce dernier, à un niveau axial situé entre la partie formant mât et les ouvertures les plus proches de cette partie formant mât. Ainsi, du fait de sa disposition à l'intérieur du mât-moyeu, le diamètre et donc la masse de l'anneau réciproque sont inférieurs à ce qu'ils seraient si cet anneau réciproque était monté autour du mât-moyeu, comme cela est le cas dans l'état de la technique.

Dans un premier exemple préféré de réalisation du support du logement circulaire en U, ce support comprend une portion tronconique, interne à la partie formant corps de moyeu et qui porte le logement circulaire au niveau de sa petite base, tandis que sa grande base se prolonge par une portion évasée et rabattue, à l'extérieur de la partie formant corps de moyeu, par-dessus le bord libre de cette partie auquel le support est fixé par des vis. Mais, il est également possible, selon un second exemple de réalisation du support, que ce dernier comporte une portée tubulaire sensiblement tronconique d'appui contre la face interne de la partie formant mât et un voile de centrage tubulaire également sensiblement tronconique qui est solidaire de la portée d'appui et qui supporte le logement circulaire.

Afin de faciliter l'accouplement au mât-moyeu des extrémités internes des organes de rappel élastique et d'amortissement en traînée associés aux pales d'un rotor équipé d'un tel mât-moyeu intégré, des attaches d'accouplement, en nombre égal au nombre des paires d'ouvertures, sont de préférence fixées chacune par une embase contre la face externe de la partie formant corps de moyeu ou de la ceinture, à un niveau axial situé sensiblement entre les deux ouvertures des paires d'ouvertures, et l'embase s'étend circonférentiellement sur le pourtour de la partie formant corps de moyeu ou de la ceinture entre deux paires adjacentes d'ouvertures. L'extension circonférentielle d'une embase d'attache entre deux paires adjacentes d'ouvertures permet une meilleure répartition des contraintes dans le mât-moyeu, sans concentration localisée de contraintes, comme cela serait obtenu si l'embase de chaque attache présentait une petite surface d'appui sur la partie formant corps de moyeu.

De plus, afin de pouvoir transférer le couple et le moment dûs aux efforts respectivement de traînée et de battement s'exerçant sur les pales, jusqu'au niveau du ou et d'encastrement du mât-moyeu sur une boîte de transmisson, le pied de la partie formant mât est de préférence boulonné à une ferrure de liaison à ce dispositif.

L'invention a également pour objet une tête de rotor, pour rotor de giravion, du type comportant un mât-moyeu intégré destiné à être entraîné en rotation autour de l'axe du rotor par l'une de ses parties fermant un mât, et présentant une partie formant corps de moyeu et à laquelle des pales de rotor sont reliées chacune par une partie d'attache fourchue à deux branches et par l'intermédiaire, d'une part, d'organes de retenue et d'articulation, comportant de préférence au moins une butée lamifiée, dont une armature externe est fixée à la partie formant corps de moyeu et dont une armature interne est fixée aux extrémités internes des deux branches, et, d'autre part, d'un organe de rappel élastique et d'amortissement en traînée dont les extrémités sont articulées par des rotules l'une sur la partie d'attache fourchue de la pale correspondante et l'autre en un point de la partie formant corps de moyeu, et cette tête de rotor se caractérise en ce que le mât-moyeu intégré est conforme à l'invention et tel que présenté ci-dessus, et en ce que les organes de retenue et d'articulation sont logés à l'intérieur de la partie formant corps de moyeu, et chacune des deux branches d'une partie d'attache fourchue traverse l'une des deux ouvertures d'une paire d'ouvertures entre lesquelles les organes de retenue et d'articulation correspondants sont fixés en appui par leur armature externe contre la ceinture de renfort ou la partie formant corps de moyeu. L'ouverture de l'extrémité libre de la partie formant corps de moyeu doit être suffisante pour permettre l'introduction des organes de retenue et d'articulation à l'intérieur de la partie formant corps de moyeu, et la section transversale interne de cette partie formant corps de moyeu, au niveau de la ceinture de renfort, doit être suffisante pour la disposition des organes de retenue et d'articulation en appui par leur armature externe contre la ceinture ou contre le corps de moyeu et entre les deux ouvertures des paires d'ouvertures, et pour la fixation des extrémités internes des deux branches des parties d'attache fourchues des pales sur les armatures internes des organes de retenue et d'articulation d'ou l'intérêt de la forme en tonneau de la partie formant corps de moyeu. Pour cette raison, et même si la partie formant mât est tronconique et converge vers son pied, le diamètre du mât-moyeu est toujours relativement important, et les contraintes dues au couple et au moment (induits respectivement par les efforts de traînée et de battement sur les pales) sont faibles. Cette disposition des organes de retenue et d'articulation dans la partie formant corps de moyeu diminue considérablement, dans le mât-moyeu, les contraintes de flexion et de cisaillement dues aux efforts tranchants alternés, au niveau de ces organes, surtout si ces derniers sont constitués, pour chaque pale, par une butée sphérique lamifiée fixée sur la partie formant corps de moyeu de sorte que son centre de rotation se trouve pratiquement dans l'épaisseur de la partie formant corps de moyeu ou de la ceinture, entre les deux ouvertures correspondantes. Par ailleurs, les efforts centrifuges en provenance des pales sont pris en charge et équilibrés entre lesdites pales par la ceinture de renfort, travaillant en traction, et ainsi ces efforts ne sollicitent pratiquement pas le mât-moyeu. De plus, comme son diamètre reste toujours relativement grand, le mât-moyeu ne subit que de faibles contraintes de torsion dues au couple moteur, qui est transmis au pied de la partie formant mât pour entraîner le mât-moyeu en rotation. En outre, il est à noter que les efforts tranchants de battement passent directement des organes de retenue et d'articulation au pied du mât-moyeu, en suivant un trajet pratiquement en ligne droite, et avec des contraintes modérées de traction/compression.

Enfin, la disposition de la tête de rotor selon l'invention permet de rapprocher au maximum les organes de retenue et d'articulation de l'axe du rotor, puisque le volume central de la partie formant corps de moyeu n'est pas occupé par de la matière. Cette mesure technique conduit non seulement à un encombrement réduit du mât-moyeu, d'ou une masse et une traînée réduite aérodynamique également réduites, mais également à un niveau d'excitation vibratoire plus faible, car l'excentricité de battement est plus faible, par comparaison avec les réalisations de l'état de la technique présentées ci-dessus.

La fixation d'une armature externe des organes de retenue et d'articulation au mât-moyeu peut être assurée par un axe traversant de l'extérieur la portion de mât-moyeu située entre les deux ouvertures correspondantes et la ceinture de renfort pour se visser dans cette armature externe. Mais, afin de ne pas affaiblir la structure du mât-moyeu, ni celle de la ceinture de renfort, par des trous pratiqués dans les parties travaillantes, et afin d'assurer un transfert des efforts et moments par des appuis directs, cette armature externe est avantageusement conformée, vers l'extérieur, en étrier qui coiffe la ceinture de renfort et la portion de la partie formant corps de moyeu qui est délimitée entre les deux ouvertures correspondantes, et un couvercle, appliqué contre la face externe de la ceinture ou de cette portion de la partie formant corps de moyeu, est vissé sur l'étrier et maintient les organes de retenue et d'articulation correspondants en place à l'intérieur de la partie formant corps de moyeu.

Afin de limiter les battements vers le bas de chaque pale par appui contre l'anneau réciproque monté à l'intérieur du mât-moyeu, un talon rigide est avantageusement solidarisé à la branche inférieure de la partie d'attache fourchue de la pale correspondante par deux boulons qui assurent la fixation des extrémités internes des deux branches de cette partie d'attache fourchue à l'armature interne des organes de retenue et d'articulation correspondants.

De plus, sur la tête de rotor conforme à l'invention, l'organe de rappel élastique et d'amortissement en traînée, prévu pour chaque pale du rotor, est avantageusement monté à l'extérieur de la partie formant corps de moyeu, entre l'une des attaches d'accouplement fixées contre la face externe de la ceinture ou de cette partie formant corps de moyeu et une attache d'accouplement portée par la partie d'attache fourchue de la pale correspondante. Pour chaque pale du rotor, la tête de rotor selon l'invention comprend également un levier de commande de l'incidence de la pale, et ce levier est fixé sur la partie d'attache fourchue correspondante, du côté opposé à l'organe de rappel, et à l'extérieur de la partie formant corps de moyeu.

Lorsqu'il n'est pas nécessaire que les pales du rotor puissent se "replier" dans le plan du rotor, il est avantageux, de manière connue en soi, que la partie d'attache fourchue de chaque pale soit directement intégrée au pied de cette pale. Par contre, si les pales doivent être repliables, et de manière également connue en soi, la partie d'attache fourchue de chaque pale est un manchon d'attache sensiblement radial, conformé, à son extrémité interne, en chape dont les deux branches sont fixées à l'armature interne des organes de retenue et d'articulation correspondants, et également conformé, à son extrémité externe, en chape de fixation au pied de la pale correspondante par deux axes sensiblement parallèles à l'axe de rotation du rotor et dont l'un est amovible, afin de permettre le repliage de la pale par pivotement autour de l'autre axe.

Quelle que soit la configuration adoptée, on constate que la tête de rotor selon l'invention est constituée d'un petit nombre de pièces ayant toutes des formes relativement simples et adaptées aux efforts à subir, ce qui permet de diminuer la masse et les coûts de fabrication et d'entretien de cette tête de rotor, tout en améliorant sa stabilité et en diminuant les vibrations, ce qui est un facteur de sécurité et de fiabilité. Comme de plus, l'encombrement d'une tête de rotor selon l'invention est limité du fait du logement des organes de retenue et d'articulation et du dispositif de butée basse dans le mât-moyeu intégré, la traînée aérodynamique est réduite, et l'ensemble de ces résultats avantageux concourt à augmenter les performances d'un hélicoptère équipé d'une telle tête de rotor, tant au niveau de son ou ses rotors principaux ou sustentateurs qu'au niveau de son rotor arrière ou anti-couple.

L'invention sera mieux comprise à l'aide de la description donnée ci-dessous d'exemples particuliers de réalisation, décrits à titre non limitatif, en référence aux dessins annexés sur lesquels:

- la figure 1 est une une schématique en coupe axiale d'un premier de mât-moyeu intégré, à ceinture de renfort interne, représenté, sur la demi-coupe de droite, comme étant associé à une pale non repliable pour former la tête de rotor d'un premier exemple de rotor principal d'hélicoptère, tandis que la demi-coupe de gauche représente l'association de ce mât-moyeu intégré à une pale repliable pour former la tête de rotor d'un second exemple de rotor principal d'hélicoptère.
- la figure 2 est une demi-coupe axiale, à plus grande échelle, correspondant à la tête de rotor représentée sur la demi-coupe de droite de la figure 1,
- la figure 3 est une vue schématique partielle, en partie en coupe et en partie en élévation latérale, de la tête de rotor de la figure 2,
- la figure 4 est une vue schématique partielle en partie en coupe avec arrachement et en partie en plan, de la tête de rotor de la figure 2,
- la figure 5 est une demi-coupe axiale de la partie supérieure de la tête de rotor représentée sur la demi-coupe de gauche de la figure 1,
- la figure 6 est une vue en coupe axiale selon deux demi-plans 45° d'un second exemple de mât-moyeu intégré associé à des pales repliables pour former la tête de rotor d'un troisième exemple de rotor principal d'hélicoptère,
- la figure 7 est une vue analogue à la figure 3 pour la tête de rotor de la figure 6, et
- la figure 8 est une vue analogue à la figure 4, pour la tête de rotor de la figure 6.

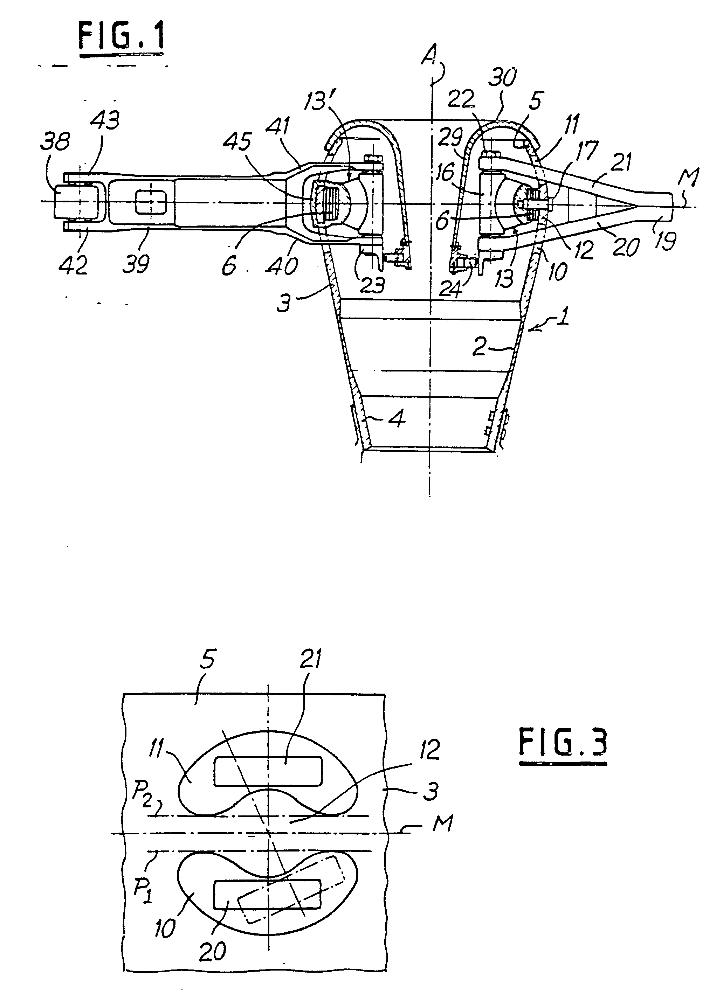

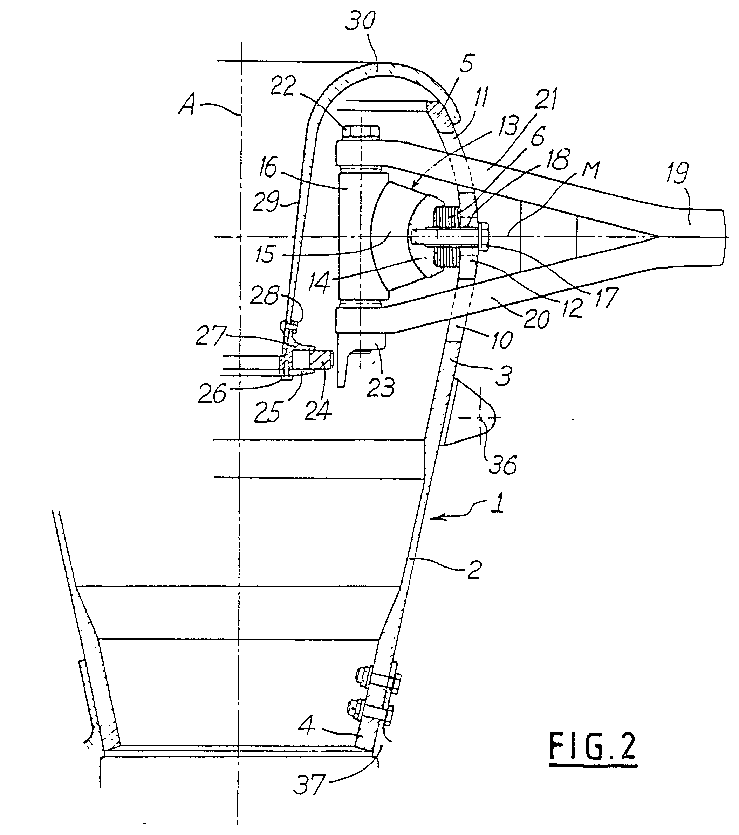

En référence à la figure 1, la tête de rotor principal comporte un mât-moyeu intégré 1, essentiellement constitué d'un corps tubulaire monobloc, à symétrie de révolution, dont la partie inférieure forme un mât tubulaire 2, tandis que sa partie supérieure forme un corps de moyeu tubulaire 3. La partie formant mât 2 présente une forme générale extérieure sensiblement tronconique, et diverge de son extrémité inférieure, conformée en pied 4 surépaissi, vers son extrémité supérieure, également surépaissie et par laquelle cette partie formant mât 2 se raccorde à la partie formant corps de moyeu et se prolonge directement par cette partie 3, qui présente une forme générale extérieure convexe, en tonneau ouvert à son extrémité supérieure libre 5.

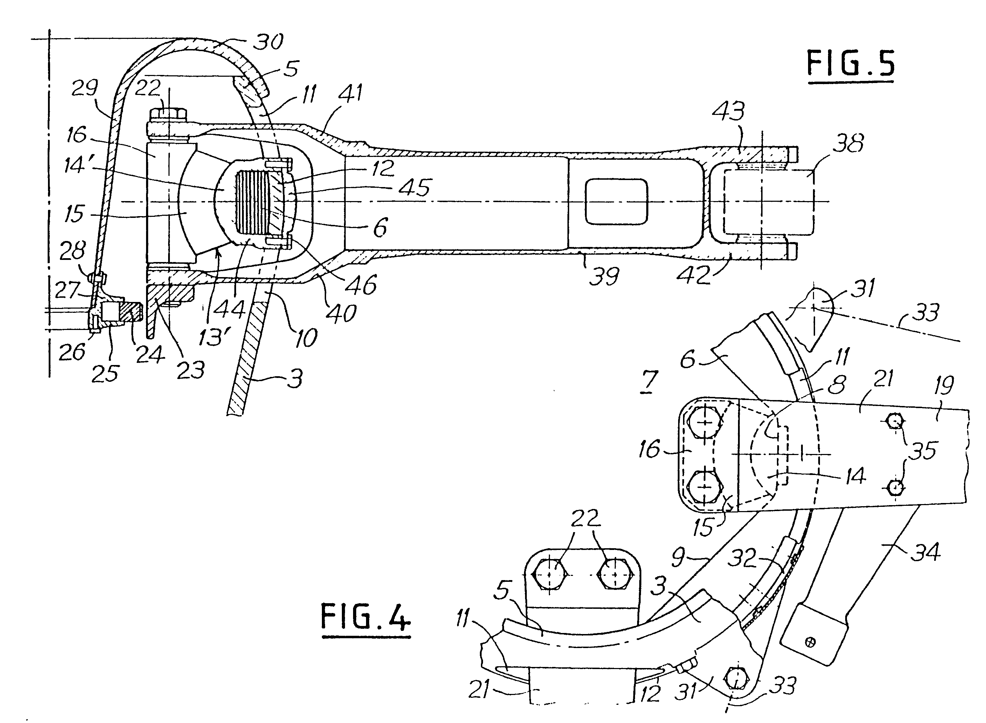

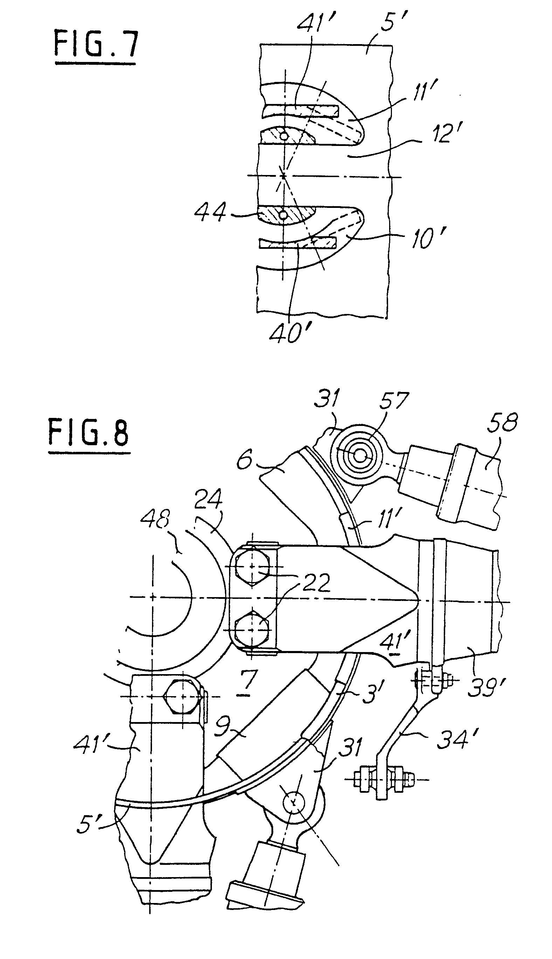

Le bord de l'extrémité supérieure libre 5 du mât-moyeu 1 délimite une ouverture circulaire dont le diamètre correspond sensiblement au diamètre interne de la portion de raccordement des parties formant mât 2 et corps de moyeu 3. Ce corps tubulaire monobloc est fabriqué par bobinage de stratifils de carbone et/ou de Kevlar (marque déposée) préimprégnés d'une résine époxyde puis par polymérisation de la résine qui est durcie, ou par drapage de plis de tissus de fibres de carbone et/ou de Kevlar préimprégnés de résine époxyde, et moulage sous pression et à chaud pour polymériser et durcir la résine. Une ceinture 6, de structure composite est disposée à l'intérieur de la partie formant corps de moyeu 3. Cette ceinture 6, constituée de stratifils unidirectionnels de carbone ou de Kevlar, présente une face latérale interne, délimitée par une surface annulaire de section transversale essentiellement polygonale, et une face latérale externe, délimitée par une surface annulaire de section circulaire, légèrement bombée, de forme convexe correspondant à la concavité de la face interne de la partie en tonneau formant corps de moyeu 3, et par laquelle la ceinture 6 est solidaire de cette partie formant corps de moyeu 3. La ceinture 6 est symétrique par rapport à un plan médian M, perpendiculaire à son axe, et elle est solidarisée à la partie formant corps de moyeu 3 de telle sorte que son plan médian M soit situé dans le plan perpendiculaire à l'axe A du mât-moyeu 1 et passant par la section de plus grand diamètre interne de la partie en tonneau formant corps de moyeu 3. La ceinture 6 est donc rattachée à la face interne de la partie formant corps de moyeu 3, sur une bande de surface annulaire délimitée sur cette face interne entre deux plans transversaux $P_1$ et $P_2$, perpendiculaires à l'axe A et situés à égale distance de part et d'autre du plan médian M de la ceinture (la trace de ces plans M, $P_1$ et $P_2$ étant indiquée en trait interrompu sur la figure 3). La ceinture 6, sur laquelle est moulé le corps tubulaire du mât-moyeu 1, est réalisée sous forme d'un anneau bobiné dont la face latérale interne (figures 4 et 8) a la forme d'un polygone pseudo-régulier à petits côtés égaux 8 alternés avec de grands côtés égaux 9 et en nombre égal au nombre des pales du rotor, les sommets du polygone étant sensiblement arrondis, et la face latérale externe de l'anneau bobiné formant la ceinture 6 est bobinée de façon circulaire au diamètre interne du corps de moyeu. Comme les exemples de rotor représentés sur les figures sont quadripales, l'évidement 7 a sensiblement une forme en plan carrée, délimitée par quatre grands côtés 9 raccordés par quatre petits côtés 8 (dont l'un est visible sur la figure 4), ces derniers correspondant, sur la face latérale interne de la ceinture 6, à des facettes contre lesquelles sont fixées des butées sphériques lamifiées comme expliqué plus précisément ci-dessous. Cette forme particulière de la ceinture 6 permet de lui conférer une excellente rigidité. Dans le corps tubulaire ainsi formé avec sa ceinture interne 6, des paires d'ouvertures en forme de haricot, en nombre égal au nombre des pales du rotor, sont usinées dans la partie formant corps de moyeu 3. Dans les exemples de rotor représentés sur les figures, les quatre paires d'ouvertures sont régulièrement réparties en direction circonférentielle sur le pourtour de la partie en tonneau 3, et chaque paire d'ouvertures est percée en regard de l'un des petits côtés 8 de l'évidement interne polygonal 7 de la ceinture 6.

Les deux ouvertures 10 et 11 de chaque paire sont axialement espacées de part et d'autre de la ceinture 6, l'une étant une ouverture inférieure 10 percée dans la zone de la partie formant corps de moyeu 13 qui s'étend entre la ceinture 6 et la partie formant mât 2, et autre ouverture étant une ouverture supérieure 11 percée dans la zone de la partie formant corps de moyeu 1 qui s'étend entre la ceinture 6 et le bord supérieur 5 de cette partie en tonneau 3. Les ouverture 10 et 11 sont en forme de haricot et présentent leur concavité tournée l'une vers l'autre, en étant symétriques l'une de l'autre par rapport au plan médian M de la ceinture 6, comme cela est clairement représenté sur la figure 3. Les extrémités en direction circonférentielle des quatre ouvertures inférieures 10 sont pratiquement situées dans le plan transversal $P_1$ limitant vers le bas la zone d'appui de la ceinture 6 contre l'intérieur de la partie en tonneau 3, tandis que les extrémités en direction circonférentielle des quatre ouvertures supérieures 11 sont pratiquement dans le plan transversal $P_2$ limitant vers le haut cette même zone d'appui de la ceinture 6 contre la partie en tonneau 3.

Les deux ouvertures 10 et 11 d'une même paire délimitent entre elles, sur la partie en tonneau formant corps de moyeu 3, une portion s'étendant en direction circonférentielle et en forme de pont 12. Chacune des quatre pales du rotor est reliée à la paartie formant corps de moyeu 3 par une butée sphérique lamifiée 13, permettant l'articulation de la pale sur le moyeu 3 autour de ses trois axes de battement, de traînée et de changement de pas, qui se coupent au point de rotulage déterminé par le centre de rotation de la butée sphérique lamifiée correspondante. Cet organe est un composant désormais bien connu, comprenant essentiellement une partie centrale lamifiée, constituée d'un empilement de couches en forme de calottes sphériques et alternativement rigides, par exemple métalliques, et en un matériau élastique, tel qu'un caoutchouc synthétique, par exemple en élastomère de silicone. Cette partie centrale lamifiée étant vulcanisée entre deux armatures rigides, par exemple métalliques.

Dans l'exemple de réalisation représenté sur la demi-vue de droite de la figure 1 et sur les figures 2 à 4, chaque butée lamifiée sphérique 13 est appliquée contre un petit côté 8 de l'évidement 7 de la ceinture composite 6, en regard d'un pont 12 entre les deux ouvertures 10 et 11 correspondantes, et la butée 13 est fixée contre la ceinture 6 par son armature radiale externe 14, conformée, dans sa partie externe, en petit étrier ouvert vers l'extérieur afin de chevaucher partiellemnet les faces supérieure et inférieure de la ceinture 6, ce qui assure par simple appui le transfert des efforts et moments sur la ceinture 6. Par sa partie radiale interne, de forme convexe, l'armature externe 14 est solidaire de la face externe concave de la partie centrale lamifiée 15 de cette butée 13, tandis que cette partie centrale lamifiée 15 est solidaire, par sa face interne convexe, de la partie radiale externe concave de l'armature interne 16. La butée sphérique 13 est disposée à l'intérieur de la partie en tonneau formant corps de moyeu 3, de sorte que son centre de rotation soit situé dans le plan médian M de la ceinture 6 et dans l'épaisseur du pont 12 correspondant, et la butée 13 est retenue en position à l'aide d'un boulon 17 introduit de l'extérieur du corps de moyeu 3 dans une douille 18 engagée dans des trous alignés et percés dans le pont 12, la ceinture 6 et l'armature externe 14, dans laquelle l'extrémité filetée de la tige du boulon 17 est vissée.

Le pied de chaque pale est conformé en partie d'attache fourchue 19 à deux branches superposées, dont la branche inférieure 20 traverse l'ouverture inférieure 10 correspondante, et la branche supérieure 21 traverse l'ouverture supérieure 11 correspondante, les extrémités radiales internes des deux branches 20 et 21 étant fixées contre l'armature interne 16 de la butée sphérique 13 par deux boulons 22, qui traversent chacun des trous alignés percés dans l'armature interne 16 et dans ces extrémités internes des branches 20 et 21, les têtes des boulons 22 étant en appui contre la face supérieure de la branche supérieure 21, et les extrémités filetées des tiges des boulons 22 étant vissées dans un talon rigide 23 ainsi fixé contre la face inférieure de l'extrémité interne de la branche inférieure 20.

L'armature interne 16 reliant le pied fourchu 19 de la pale à la butée sphérique 13 fait également fonction d'entretoise maintenant les deux branches 20 et 21 écartées avec un écartement constant.

Pour limiter les battements vers le bas de la pale, aux vitesses de rotation faibles ou nulles du rotor, le talon 23 coopère avec un anneau réciproque 24, réalisé en composite, à fibres de carbone agglomérées dans une résine durcie, et ceinturé d'une bande d'acier. Cet anneau réciproque 24 est monté latéralement ou radialement coulissant dans un logement en U ouvert vers l'extérieur et formé par l'association d'une plaque annulaire inférieure 25 vissée par une couronne de vis 26 sur un organe annulaire supérieur 27 de section sensiblement en forme de T, lui-même vissé par plusieurs vis telles que 28 sur l'extrémité inférieure resserrée d'un support tronconique 29, coaxial au mât-moyeu 1, engagé dans ce dernier par l'ouverture de son bord supérieur 5, et dont la partie supérieure 30 est évasée et arrondie vers l'extérieur, et rabattue par-dessus le bord supérieur 5 de la partie formant corps de moyeu 3, auquel cette partie supérieure 30 est fixée, par exemple par des vis (non représentées). Le support tronconique 29 s'étend axialement à l'intérieur du mât-moyeu 1 sur une distance suffisante pour que le logement en U 25 - 27 et l'anneau réciproque 24 se trouvent légèrement en-dessous du niveau des ouvertures inférieures 10, de sorte que les talons 23 des pales viennent s'appuyer contre l'anneau réciproque 24 dès que les pales ne sont plus suffisamment sollicitées par la force centrifuge et pivotent vers le bas autour des centres de rotation des butées sphériques 13 d'un angle prédéterminé. Le dispositif de butée basse interne au moyeu 3 et constitué par l'anneau réciproque 24, le logement 25 - 27 et le support 29, est dimensionné pour encaisser le moment statique des pales, à l'arrêt du rotor.

L'amortissement de chaque pale en traînée et le rappel élastique de celle-ci sur son axe neutre sont assurés par un organe externe au mât-moyeu 1 et disposé latéralement entre la partie formant corps de moyeu 3 et le pied de pale 19. Cet organe, appelé amortisseur de traînée, contre fiche de rappel élastique en traînée à amortissement incorporé ou même adaptateur de fréquences, peut être un organe hydraulique ou un organe visco-élastique constitué d'un empilement alterné de plaques rigides et de plaques d'un matériau visco-élastique ou de tubes coaxiaux entre lesquels est incorporé un manchon cylindrique en matériau visco-élastique. Il est accouplé par ses extrémités par des rotules, d'une part sur le pied de pale 19, et d'autre part sur la partie formant corps de moyeu 3, à l'aide d'une attache d'accouplement 31, en saillie radialement vers l'extérieur de la zone délimitée sur cette partie formant corps de moyeu 3 entre les deux plans transversaux $P_1$ et $P_2$, par une embase 32 cintrée, s'étendant en direction circonférentielle entre deux paires adjacentes d'ouvertures en forme de haricot, et boulonnée en position. Sur la figure 4, les amortisseurs de traînée ne sont pas représentés, et on a seulement indiqué les axes longitudinaux 33 de deux d'entre eux, les attaches 31 donnant à ces amortisseurs une orientation sensiblement tangentielle par rapport à la partie formant corps de moyeu 3.

Le pied 19 de chaque pale porte également, du côté opposé à l'amortisseur de traînée, un levier 34 de commande de l'incidence de la pale, qui est fixé sur le pied 19 par deux boulons 35.

Pour permettre l'accouplement au mât-moyeu 1 d'un compas d'entraînement en rotation du plateau cyclique rotatif (non représenté), une attache 36 est fixée en saillie vers l'extérieur sur la zone de raccordement des parties formant mât 2 et corps de moyeu 3.

Enfin, une ferrure 37 est boulonnée autour du pied 4 du mât-moyeu 1, afin de relier ce dernier à un dispositif d'entraînement en rotation et d'encastrement sur la boîte de transmission principale, ce dispositif comprenant au moins un roulement.

Sur la tête de rotor ainsi constituée, la ceinture composite 6 interne au mât-moyeu 1, et qui lui est solidaire, reprend en traction les efforts centrifuges s'exerçant sur les pales pour les équilibrer entre elles, ces efforts centrifuges ne sollicitant pratiquement pas le mât-moyeu 1 lui-même. Les efforts tranchants alternés au niveau des butées sphériques 13 induisent dans le mât-moyeu 1 des contraintes de flexion et de cisaillement relativement faibles, et notamment les efforts verticaux de battement transférés aux butées sphériques 13 passent de celles-ci à la ceinture 6 et de cette dernière au mât-moyeu 1 directement jusqu'à la ferrure 37 de son pied 4, avec des contraintes de traction/ compression modérées.

Le montage du rotor est simple: après l'encastrement du mât-moyeu 1 sur la boîte de transmission principale, les butées sphériques 13 sont successivement introduites dans la partie formant corps de moyeu 3 par l'ouverture de diamètre suffisant du bord supérieur 5 de celle-ci, et fixées en position contre la ceinture 6. Puis on présente une à une les pales à pied fourchu 19, et on engage pour chacune les branches inférieure 20 et supérieure 21 dans les ouvertures 10 et 11 correspondantes. On boulonne ensuite les extrémités internes des branches 20 et 21 sur l'armature interne 16 de la butée sphérique 13 correspondante, à l'aide des deux boulons 22 qui se vissent dans le talon 23 correspondant. On présente ensuite par le haut le support tronconique 29 sur l'extrémité inférieure duquel on a préalablement monté le logement en U 25 - 27 et l'anneau réciproque 24, et on introduit axialement ce support 29 dans le mât-moyeu 1 jusqu'à ce que sa partie 30 recourbée vienne en appui contre le bord supérieur 5 du mât-moyeu 1, auquel la partie recourbée 30 est fixée par une couronne de vis. Puis on accouple les amortisseurs de traînée au mât-moyeu 1 et les leviers de commande de l'incidence des pales aux biellettes de commande correspondantes.

Les opérations de démontage s'effectuent dans l'ordre inverse.

Cette disposition de tête de rotor permet de rapprocher les butées sphériques 13, ainsi que le dispositif de butée basse à anneau réciproque 24 et à talons 23, de l'axe A du rotor, sans gêner les mouvements des pales par rapport au mât-moyeu 1 autour des centres de rotation des butées sphériques 13, grâce au passage et aux débattements des branches inférieure et supérieure 20 et 21 respectivement dans les ouvertures en forme de haricot 10 et 11 ménagées dans le mât-moyeu 1. Cette disposition conduit donc à un encombrement réduit, et à un moindre poids ainsi qu'à une moindre traînée aérodynamique, et à un faible niveau d'excitation vibratoire, du fait que l'excentricité de battement est faible.

Le second exemple de réalisation, représenté sur la demi-vue de gauche de la figure 1 et sur la figure 5 ne se distingue de celui qui vient d'être décrit que par deux différences principales: l'une concerne l'organe de liaison de chaque pale à l'armature interne de la butée sphérique correspondante, et l'autre la liaison de l'armature externe de cette butée sphérique au mât-moyeu 1. En effet, cette tête de rotor est destinée à un rotor à pales repliable par pivotement sensiblement dans le plan du rotor. De ce fait, le pied 38 de chaque pale (représentée en trait interrompu sur la figure 5) est relié à la butée sphérique 13' correspondante par un manchon radial 39, dont la partie d'extrémité interne est conformée en chape à deux branches 40 et 41, la branche inférieure 40 traversant l'ouverture inférieure 10 d'une paire d'ouvertures en forme de haricot de la partie formant corps de moyeu 3, et la branche supérieure 41 traversant l'ouverture supérieure 11 de cette paire d'ouvertures, pour être fixées par leurs extrémités internes sur l'armature interne 16 par les deux boulons 22. La partie d'extrémité externe du manchon 39 est également conformée en chape, et le pied de pale 38 est engagé entre la branche inférieure 42 et la branche supérieure 43 de cette chape externe, en étant retenu entre elles par deux axes disposés côte-à-côte et perpendiculaires au plan du rotor, et qui traversent ces deux branches 42 et 43 et le pied de pale 38, l'un des axes étant amovible pour permettre le pivotement de la pale autour de l'autre axe. Dans ce cas, c'est le manchon 39 qui, d'un côté, porte une attache d'accouplement à l'extrémité de l'amortisseur de traînée, et de l'autre côté, porte le levier de commande de pas de la pale correspondante.

L'autre différence principale est que l'armature externe 14' de la butée sphérique 13' est conformée, dans sa partie externe, en étrier 44 qui coiffe la ceinture composite 6 et le pont 12 de la partie formant corps de moyeu 3, entre les deux ouvertures 10 et 11. Un couvercle 45 est appliqué de l'extérieur contre le pont 12 et contre les extrémités externes de l'étrier 44 auxquelles le couvercle 45 est fixé par deux lignes de vis 46. Ce montage a l'avantage, par rapport à l'utilisation d'un boulon 17 traversant le pont 12 et la ceinture 6 et se vissant dans l'armature interne 14, comme représenté sur la figure 2, de permettre le passage de tous les efforts et moments de la butée sphérique 13' au mât-moyeu 1 par des appuis directs, sans affaiblir la structure du mât-moyeu 1 et celle de la ceinture 6 par des trous percés dans des parties travaillantes.

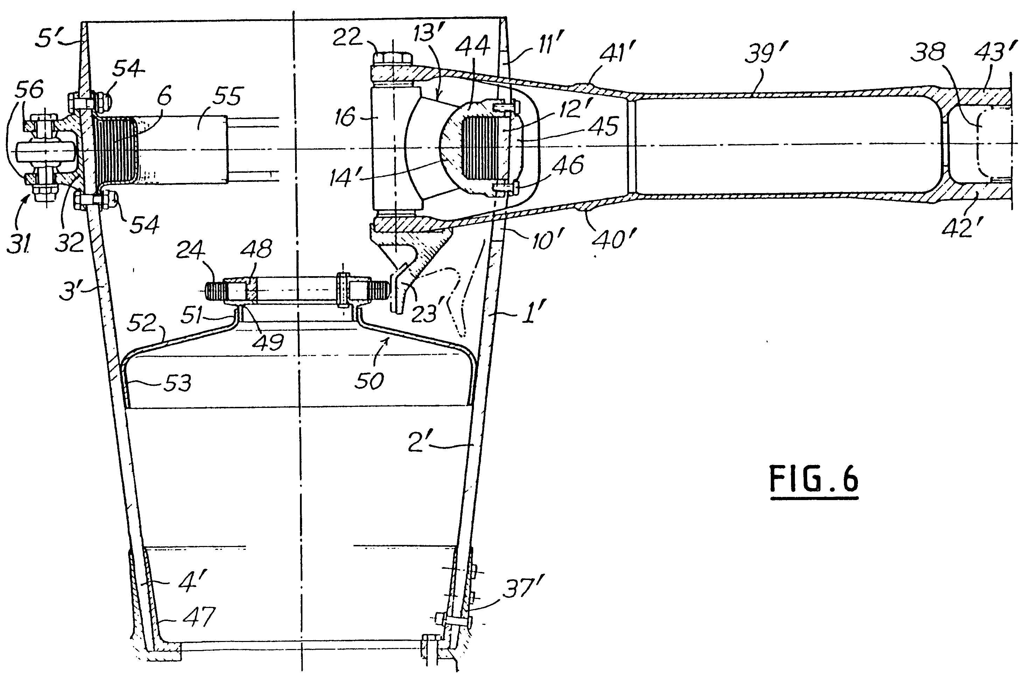

Le troisième exemple, représenté sur les figures 6 à 8, est analogue au second exemple qui vient d'être décrit dans la mesure où, d'une part, le pied 38 de chaque pale est relié à l'armature interne 16 de la butée sphérique 13' correspondante par un manchon 39', dont les deux parties d'extrémité sont conformées en chapes, afin que la pale puisse pivoter autour de l'un des deux axes de fixation du pied de pale 38 aux deux branches 42' et 43' de la chape externe, après enlèvement de l'autre axe qui est amovible, et afin que l'armature interne 16 soit montée en entretoise entre les extrémités internes des deux branches 40' et 41' de la chape interne. D'autre part, l'armature externe 14' de la butée sphérique 13' a sa partie externe conformée en étrier 44 coiffant la ceinture 6 et le pont 12' et fixé par des vis 46 au couvercle 45.

Mais, dans cet exemple, le pont 12, délimité entre les ouvertures 10' et 11', a des bords supérieur et inférieur rectilignes (voir figure 7), ce qui facilite la réalisation des ouvertures 10' et 11' de l'étrier 44 et du couvercle 45, ainsi que leur positionnement. De plus, le mât-moyeu 1', bien que tronconique dans sa partie formant mât 2' et convexe dans sa partie formant corps de moyeu 3', ne présente pas une forme de tonneau dans cette partie 3'. Le mât-moyeu 1', également composite, est réalisé par drapage et à épaisseur constante, puis il est usiné à ses extrémités pour présenter un pied 4' et une extrémité supérieure 5' qui sont effilés, le pied 4' étant pincé entre deux ferrures boulonnées 37' et 47 de liaison au dispositif d'entraînement en rotation du mât-moyeu 1'.

Dans cet exemple, l'anneau réciproque 24 est monté coulissant dans un logement en U ouvert vers l'extérieur et formé, par boulonnage d'un organe annulaire supérieur 48, de section transversale en L couché, sur un organe annulaire inférieur 49, de section transversale en T, lui-même emboîté et retenu par des vis (non représentées) dans la partie supérieure cylindrique 51 d'un support 50, composite ou métallique. Celui-ci présente un voile tronconique 52 divergent vers le bas et qui se prolonge par une portée de centrage tronconique 53, convergeant vers le bas et par laquelle le support 50 est en appui contre la face interne de la partie formant mât 2'. L'anneau réciproque 24 coopère avec un talon 23' fixé sous la face inférieure de l'extrémité interne de la branche inférieure 40' du manchon 39' par les deux boulons 22 de fixation des deux branches 40' et 41' à l'armature interne 16 de la butée sphérique 13.

Sur la figure 6, on a représenté une attache d'amortisseur 31, dont l'embase cintrée 32, qui s'étend entre deux paires adjacentes d'ouvertures 10' et 11', est boulonnée contre la face externe de la partie formant corps de moyeu 3' par deux lignes de boulons 54, qui fixent simultanément à la face interne de cette partie 3' une tôle en U 55 à bords rabattus vers l'extérieur, et destinée à répartir les efforts d'appui des boulons 54. L'embase 32 porte deux pattes d'attache 56 qui sont parallèles l'une à l'autre et entre lesquelles est fixée la rotule 57 de l'extrémité interne de l'amortisseur de traînée 58 (représenté sur la figure 8), et qui est accouplé par une autre rotule, à son extrémité externe, sur le manchon 39'. Ce dernier porte enfin, du côté opposé à l'amortisseur 58, le levier 34' de commande du pas de la pale correspondante.

Dans cet exemple, il est clair que l'anneau réciproque 24 et son support 50 sont logés dans le mât-moyeu 1' avant l'introduction et la fixation dans ce dernier des butées sphériques 13'. Pour le reste, le montage s'effectue de la même façon que pour les exemples précédents.

Dans tous ces exemples, le mât-moyeu intégré supporte une ceinture de renfort qui est interne à la partie formant corps de moyeu. Mais il est tout à fait possible de monter la ceinture de renfort autour de cette partie formant corps de moyeu. Dans ce cas, les attaches d'accouplement des organes de rappel élastique et d'amortissement en traînée des pales peuvent être supportées par la ceinture, tandis que l'armature radiale externe de chaque butée sphérique lamifiée est directement appliquée contre la face interne de la partie formant corps de moyeu.

**Revendications**

1. Mât-moyeu intégré pour rotor de giravion, du type comportant une partie tubulaire formant un mât (2), dont une extrémité est conformée en pied (4) par lequel le mât-moyeu (1) est destiné à être entraîné en rotation autour de l'axe (A) de la partie formant mât (2), laquelle est solidaire, du côté opposé au pied (4), d'une partie formant un corps de moyeu (3) coaxial à la partie formant mât (2) et destiné à être relié à des pales de rotor par l'intermédiaire d'un palier élastique, caractérisé en ce que la partie formant corps de moyeu (3) est également une partie tubulaire qui prolonge la partie formant mât (2), en ce que des paires d'ouvertures (10, 11), en nombre égal au nombre des pales du rotor, sont pratiquées dans la partie formant corps de moyeu (3) et sont régulièrement réparties en direction circonférentielle sur le pourtour de cette partie formant corps de moyeu (3), les deux ouvertures (10, 11) de chaque paire étant axialement espacées l'une de l'autre, en ce qu'une ceinture (6) de renfort est assujettie à la face interne ou externe de cette partie formant corps de moyeu (3), entre les deux ouvertures (10, 11) de chaque paire, et en ce que le pied de chaque pale est conformé en parties d'attaches de fourches à deux branches (20, 21; 40, 41; 40', 41') superposées, dont la branche supérieure traverse l'ouverture supérieure (11, 11') et la branche inférieure traverse l'ouverture inférieure (10, 10') les extrémités radiales internes des deux branches étant fixées contre l'armature interne d'une butée sphérique (13, 13') qui est appliquée contre la ceinture (6), ou contre la face interne de la partie formant corps de moyeu (3) au droit de la ceinture (6).

2. Mât-moyeu intégré selon la revendication 1, caractérisé en ce que les extrémités en direction circonférentielle des ouvertures d'une part les plus proches (10) et d'autre les plus éloignées (11) de la partie formant mât (2) se trouvent sensiblement et respectivement dans un premier et dans un second plan transversal (P₁, P₂) perpendiculaires à l'axe A du mât-moyeu (1).

3. Mât-moyeu intégré selon l'une des revendications 1 et 2, caractérisé en ce que les deux ouvertures (10, 11) de chaque paire ont sensiblement une forme de haricot et présentent leur concavité tournée l'une vers l'autre.

4. Mât-moyeu intégré selon l'une des revendications 1 à 3, caractérisé en ce que la partie formant mât (2) et la partie formant corps de moyeu (3) sont constituées par une unique pièce tubulaire (1) à symétrie de révolution, et en ce que les deux ouvertures (10, 11) de chaque paire d'ouvertures sont symétriques l'une de l'autre par rapport à un plan M médian de la ceinture (6) de renfort qui est perpendiculaire à l'axe (A) du mât-moyeu.

5. Mât-moyeu intégré selon l'une des revendications 1 à 4, caractérisé en ce que la ceinture de renfort (6) présente une surface latérale externe sensiblement en forme d'anneau circulaire et une surface latérale interne sensiblement en forme d'anneau de section polygonale.

6. Mât-moyeu intégré selon l'une des revendications 1 à 5, caractérisé en ce qu'au moins la partie formant mât (2) présente une forme générale extérieure sensiblement tronconique divergeant du pied (4) de cette partie vers la partie formant corps de moyeu (3).

7. Mât-moyeu intégré selon la revendication 6, caractérisé en ce que les parties formant mât (2), corps de moyeu (3) et ceinture de renfort (6) sont métalliques et d'une seule pièce.

8. Mât-moyeu intégré selon la revendication 6, caractérisé en ce que les parties formant mât (2), corps de moyeu (3) et ceinture de renfort (6), étant métalliques, la partie formant corps de moyeu (3) présente une forme générale extérieure sensiblement cylindrique ou tronconique divergeant vers son extrémité (5) opposée à la partie formant mât (2), et la ceinture de renfort (6) est un anneau circulaire fixé à la partie formant corps de moyeu (3) contre la face interne ou externe de cette partie et entre les deux ouvertures de chaque paire d ouvertures (10, 11).

9. Mât-moyeu intégré selon la revendication 6, caractérisé en ce que les parties formant mât (2), corps de moyeu (3) et ceinture de renfort (6) sont réalisées d'une seule pièce en matériaux composites à fibres à haute résistance mécanique agglomérées par une résine synthétique durcie.

10. Mât-moyeu intégré selon la revendication 9, caractérisé en ce que la ceinture de renfort (6) réalisée en matériaux composites constitués de fibres synthétiques ou minérales unidirectionnelles à haute résistance mécanique agglomérées par une résine synthétique durcie, est fabriquée par bobinage desdites fibres et ensuite fixée à la partie formant corps de moyeu (3), contre la face interne ou externe de cette partie et entre les deux ouvertures de chaque paire d'ouvertures (10, 11).

11. Mât-moyeu intégré selon l'une des revendications 1 à 10, caractérise en ce que la partie formant corps de moyeu (3) présente une forme générale extérieure sensiblement convexe.

12. Mât-moyeu intégré selon la revendication 11, caractérisé en ce que la partie formant corps de moyeu (3) présente sensiblement la forme d'une tonneau de diamètre maximal au niveau de la ceinture (6).

13. Mât-moyeu intégré selon l'une des revendications 1 à 12, caractérisé en ce qu'un anneau réciproque (24) rigide, destiné à former une butée basse limitant les battements des pales du rotor vers le bas, est monté latéralement coulissant dans un logement circulaire en forme de U s'ouvrant radialement vers l'extérieur (25, 27) et maintenu par un support (29) coaxialement au mât-moyeu (1) et à l'intérieur de ce dernier, à un niveau axial situé entre la partie formant mât (2) et les ouvertures les plus proches (10) de cette partie formant mât (2).

14. Mât-moyeu intégré selon la revendication 13, caractérisé en ce que le support du logement circulaire en forme de U (25, 27) comprend une portion tronconique (29) interne à la partie formant corps de moyeu (3) et qui porte le logement circulaire (25, 27) au niveau de sa petite base, tandis que sa grande base se prolonge par une portion évasée et rabattue (30), à l'extérieur de la partie formant corps de moyeu (3), par-dessus le bord libre (5) de cette partie, auquel le support est fixé.

15. Mât-moyeu intégré selon la revendication 13, caractérisé en ce que le support du logement circulaire en forme de U (48, 49) est un support comportant une portée tubulaire (53) sensiblement tronconique d'appui contre la face interne de la partie formant mât (2) et un voile de centrage tubulaire (52) également sensiblement tronconique, qui est solidaire de la portée d'appui (53) et qui supporte le logement circulaire (48, 49).

16. Mât-moyeu intégré selon l'une des revendications 1 à 15, caractérisé en ce que des attaches (31), en nombre égal au nombre des paires d'ouvertures et destinées chacune à l'accouplement au mât-moyeu (1) de l'extrémité interne d'un organe de rappel élastique et d'amortissement en traînée (58) d'une pale de rotor, sont fixées chacune par une embase (32) contre la face externe de la partie formant corps de moyeu (3) ou de la ceinture (6), à un niveau axial situé sensiblement entre les deux ouvertures (10, 11) des paires d'ouvertures, et l'embase (32) s'étend circonférentiellement sur le pourtour de la partie formant corps de moyeu (3) ou de la ceinture (6), entre deux paires adjacentes d'ouvertures.

17. Mât-moyeu intégré selon l'une des revendications 1 à 16, caractérisé en ce que le pied (4) de la partie formant mât (2) est boulonné à une ferrure (37) de liaison a un dispositif d'encastrement et d'entraînement en rotation du mât-moyeu (1) sur une boîte de transmission.

18. Tête de rotor pour rotor de giravion, du type comportant un mât-moyeu intégré (1) destiné à être entraîné en rotation autour de l'axe du rotor (A) par l'une de ses parties formant un mât (2), et présentant une partie formant un corps de moyeu (3) et à laquelle des pales de rotor sont reliées chacune par une partie d'attache fourchue (19) à deux branches (20, 21), et par l'intermédiaire, d'une part, d'organes de retenue et d'articulation (13) dont une armature externe (14) est fixée à la partie formant corps de moyeu (3), et dont une armature interne (16) est fixée aux extrémités internes des deux branches (20, 21), et, d'autre part, d'un organe de rappel élastique et d'amortissement en traînée (58), dont les extrémités sont articulées par des rotules, l'une sur la partie d'attache fourchue (19) de la pale correspondante, et l'autre (57) en un point de la partie formant corps de moyeu (3), caractérisée en ce que le mât-moyeu intégré (1) est un mât-moyeu selon l'une des revendications 1 à 17 précédentes, les organes de retenue et d'articulation (13) étant logés à l'intérieur de la partie formant corps de moyeu (3), et chacune des deux branches (20, 21) d'une partie d'attache fourchue (19) traversant l'une des deux ouvertures (10, 11) d'une paire d'ouvertures, entre lesquelles ces organes de retenue et d'articulation (13) sont fixés en appui par leur armature externe (14) contre la ceinture de renfort (6) ou la partie formant corps de moyeu.

19. Tête de rotor selon la revendication 18, caractérisée en ce que pour chaque pale, les organes de retenue et d'articulation sont constitués par une butée sphérique lamifiée (13) fixée à l'intérieur de la partie formant corps de moyeu (3) de sorte que son centre de rotation se trouve pratiquement dans l'épaisseur de la partie formant corps de moyeu (3) ou de la ceinture (6), entre les deux ouvertures (10, 11) correspondantes.

20. Tête de rotor selon l'une des revendications 18 et 19, caractérisée en ce que l'armature externe (14') des organes de retenue et d'articulation (13') pour chaque pale est conformée, vers l'extérieur, en étrier (44) qui coiffe la ceinture de renfort (6) et la portion (12) de la partie formant corps de moyeu (3) qui est délimitée entre les deux ouvertures (10, 11) correspondantes, et un couvercle (45), appliqué contre la face externe de la ceinture (6) ou de cette portion (12) de la partie formant corps de moyeu (3) et vissé sur l'étrier (44), maintient les organes de retenue et d'articulation (13') correspondants en place à l'intérieur de la partie formant corps de moyeu (3).

21. Tête de rotor selon l'une des revendications 18 à 20, équipée d'un mât-moyeu intégré selon l'une des revendications 13 à 15 précédentes, caractérisé en ce qu'un talon rigide (23), destiné à venir s'appuyer contre l'anneau réciproque (24) afin de limiter le battement d'une pale vers le bas, est solidarisé à l'une des branches (20) de la partie d'attache fourchue (19) de la pale correspondante par deux boulons (22) qui assurent la fixation des extrémités internes des deux branches (20, 21) de cette partie d'attache fourchue (19) à l'armature interne (16) des organes de retenue et d'articulation correspondants (13).

22. Tête de rotor selon l'une des revendications 18 à 21, équipée d'un mât-moyeu intégré selon la revendication 16 précédente, caractérisée en ce que, pour chaque pale du rotor, l'organe de rappel élastique et d'amortissement en traînée (58) est monté à l'extérieur de la partie formant corps de moyeu (3), entre l'une des attaches d'accouplement (31) fixées contre la face externe de cette partie formant corps de moyeu (3) et une attache d'accouplement portée par la partie d'attache fourchue (19) de la pale correspondante.

23. Tête de rotor selon la revendication 22, caractérisée on ce qu'elle comprend également, pour chaque pale du rotor, un levier de commande (34) de l'incidence de la pale, qui est fixé sur la partie d'attache fourchue (19) correspondante, du côté opposé à l'organe de rappel (58) et à l'extérieur de la partie formant corps de moyeu (3).

24. Tête de rotor selon l'une des revendications 18 à 23, caractérisée en ce que la partie d'attache fourchue (19) de chaque pale est intégrée au pied de pale.

25. Tête de rotor selon l'une des revendications 18 à 23, caractérisée en ce que la partie d'attache fourchue de chaque pale est un manchon d'attache (39), sensiblement radial, conformé à son extrémité interne en chape dont les deux branches (40, 41) sont fixées à l'armature interne (16) des organes de retenue et d'articulation (13') correspondants, et conformé à son extrémité externe en chape de fixation au pied de la pale correspondante (38) par deux axes sensiblement parallèles à l'axe (A) de rotation du rotor et dont l'un est amovible afin de permettre le repliage de la pale par pivotement autour de l'autre axe.

**Patentansprüche**

1. Mast-Nabeneinheit für einen Rotor eines Drehflüglers, der Art, bei der ein rohrförmiger Teil einen Mast (2) bildet, dessen eines Ende als Fuß (4) ausgebildet ist, über den die Mast-Nabeneinheit (1) zu einer Rotation um die Achse (A) des den Mast (2) bildenden Teiles angetrieben ist, der auf der vom Fuß (4) abgewandten Seite fest mit einem Teil versehen ist, der einen Nabenkörper (3) bildet, welcher koaxial zu dem den Mast (2) bildenden Teil und dazu bestimmt ist, über ein zwischengefügtes elastisches Lager mit den Flügelblättern des Rotors verbunden zu werden, dadurch gekennzeichnet, daß auch der einen Nabenkörper (3) bildende Teil ein rohrförmiges Teil ist, welches das den Mast (2) bildenden Teil verlängert, daß Paare von Öffnungen (10, 11) in der Anzahl, die jener der Flügelblätter des Rotors entspricht, in dem einen Nabenkörper (3) bildenden Teil angebracht und gleichmäßig in Umfangsrichtung auf dem Umfang dieses den Nabenkörper (3) bildenden Teiles verteilt sind, wobei die beiden Öffnungen (10, 11) jedes Paares axial im Abstand zueinander angeordnet sind, daß ein Verstärkungsgürtel (6) an der Innen-oder Außenseite des den Nabenkörper (3) bildenden Teiles zwischen den beiden Öffnungen (10, 11) jedes Paares befestigt ist und daß der Fuß jedes Flügelblattes von gabelförmigen Befestigungsteilen mit zwei übereinander liegenden Armen (20, 21, 40, 41, 40', 41') gebildet ist, von denen der obere Arm durch die obere Öffnung (11, 11') und der untere Arm durch die untere Öffnung (10, 10') ragt und die radial inneren Enden der beiden Arme an einem inneren Beschlag eines kugelförmigen Widerlagers (13, 13') fixiert sind, das am Gürtel (6) oder an der Innenseite des den Nabenkörper (3) bildenden Teiles rechts vom Gürtel (6) befestigt ist.

2. Mast-Nabeneinheit nach Anspruch 1, dadurch gekennzeichnet, daß einerseits die in Umfangsrichtung am nächsten (10) liegenden und andererseits die am weitest entfernt (11) liegenden Enden der Öffnungen des den Mast bildenden Teiles (2) im wesentlichen und jeweils in einer ersten und in einer zweiten Querebene ($P_1$, $P_2$) liegen, die senkrecht auf der Achse (A) der Mast-Nabeneinheit (1) steht.

3. Mast-Nabeneinheit nach einem der Ansprüche 1 und 2, dadurch gekennzeichnet, daß die beiden Öffnungen (10, 11) jedes Paares im wesentlichen die Form einer Bohne aufweisen und mit ihrer konkaven Seite gegeneinander gerichtet sind.

4. Mast-Nabeneinheit nach einem der Ansprüche 1 bis 3, dadurch gekennzeichnet, daß der den Mast (2) bildende Teil und der die Nabe bildende Teil (3) aus einem einzigen Rohrstück (1) bestehen, das rotationssymmetrisch ist und dadurch, daß die beiden Öffnungen (10, 11) jedes Öffnungspaares zueinander im Bezug auf eine Mittelebene (M) des Verstärkungsgürtels (6) symmetrisch sind, die senkrecht auf der Achse (A) der Mast-Nabeneinheit steht.

5. Mast-Nabeneinheit nach einem der Ansprüche 1 bis 4, dadurch gekennzeichnet, daß der Verstärkungsgürtel (6) eine äußere Seitenfläche aufweist, die im wesentlichen Kreisform aufweist und eine innere Seitenfläche besitzt, die im wesentlichen die Form eines im Querschnitt polygonalen Ringes aufweist.

6. Mast-Nabeneinheit nach einem der Ansprüche 1 bis 5, dadurch gekennzeichnet, daß mindestens der den Mast bildende Teil (2) eine generelle Außenform aufweist, die im wesentlichen konisch ist und sich vom Fuß (4) dieses Teiles zu dem Teil, der den Nabenkörper (3) bildet, erweitert.

7. Mast-Nabeneinheit nach Anspruch 6, dadurch gekennzeichnet, daß die den Mast (2) den Nabenkörper (3) und den Verstärkungsgürtel (6) bildenden Teile aus Metall und aus einem Stück bestehen.

8. Mast-Nabeneinheit nach Anspruch 6, dadurch gekennzeichnet, daß die den Mast (2) den Nabenkörper (3) und den Verstärkungsgürtel (6) bildenden Teile metallisch sind und der den Nabenkörper (3) bildende Teil eine generelle Außenform aufweist, die im wesentlichen zylindrisch oder konisch und sich zu seinem, dem den Mast (2) bildenden Teil gegenüberliegenden Ende hin erweitert und daß der Verstärkungsgürtel (6) ein Kreisring ist, der an dem den Nabenkörper (3) bildenden Teil an dessen Innen- oder Außenseite und zwischen den beiden Öffnungen jedes Paares von Öffnungen (10, 11) fixiert ist.

9. Mast-Nabeneinheit nach Anspruch 6, dadurch gekennzeichnet, daß die den Mast (2), den Nabenkörper (3) und den Verstärkungsgürtel (6) bildenden Teile jeweils aus einem einzigen Stück bestehen, das aus einem aus Fasern hohen mechanischen Widerstandes und aus einem diese zusammenhaltenden synthetischen und aushärtenden Harz zusammengesetzt ist.

10. Mast-Nabeneinheit nach Anspruch 9, dadurch gekennzeichnet, daß der aus einem zusammengesetzten Material aus synthetischen oder mineralischen, in einer Richtung ausgerichteten synthetischen Fasern mit hohem mechanischem Widerstand, die durch ein aushärtendes synthetisches Harz zusammengehalten sind, bestehende Verstärkungsgürtel (6) durch Wickeln dieser Fasern fabriziert und dann an dem den Nabenkörper (3) bildenden Teil so fixiert wird, daß er an der Innen- oder Außenseite dieses Teiles und zwischen den beiden Öffnungen jedes Paares von Öffnungen (10, 11) liegt.

11. Mast-Nabeneinheit nach einem der Ansprüche 1 bis 10, dadurch gekennzeichnet, daß der den Nabenkörper (3) bildende Teil im wesentlichen eine konvexe Außenform hat.

12. Mast-Nabeneinheit nach Anspruch 11, dadurch gekennzeichnet, daß der den Nabenkörper (3) bildende Teil im wesentlichen die Form einer Tonne aufweist, die ihren maximalen Durchmesser in der Höhe des Verstärkungsgürtels (6) besitzt.

13. Mast-Nabeneinheit nach einem der Ansprüche 1 bis 12, dadurch gekennzeichnet, daß ein fester Gegenring (24) vorgesehen ist, der zur Bildung eines unteren Anschlages zur Begrenzung der Ausschläge der Flügelblätter des Rotors nach unten vorgesehen ist, seitlich gleitend in einer kreisförmigen Aufnahme in der Form eines sich radial nach außen (25, 27) öffnenden U's montiert und von einem Support (29) koaxial zu der Mast-Nabeneinheit (1) und in deren Inneren gehalten wird, und zwar in einer axialen Höhe, die zwischen dem den Mast (2) bildenden Teil und den am nächsten (10) gelegenen Öffnungen dieses den Mast (2) bildenden Teiles liegt.

14. Mast-Nabeneinheit nach Anspruch 13, dadurch gekennzeichnet, daß der Support der in Form des U (25, 27) ausgebildeten kreisförmigen Aufnahme einen konischen Teil (29) innerhalb des den Nabenkörper (3) bildenden Teiles besitzt, der die kreisförmige Aufnahme (25, 27) in der Höhe seiner kleinen Grundfläche trägt, während seine größere Grundfläche sich in einen glockenförmigen und an der Außenseite des den Nabenkörper (3) bildenden Teiles umgebogenen Bereich (30) verlängert, der über den freien Rand (5) des Nabenkörpers (3) übersteht, an dem der Support festgelegt ist.

15. Mast-Nabeneinheit nach Anspruch 13, dadurch gekennzeichnet, daß der Support für die in Form des U (48, 49) ausgebildete kreisförmige Aufnahme ein Tragteil ist, das aus einer rohrförmigen Tragfläche (53) besteht, die im wesentlichen konisch ist und an der Innenseite des den Mast (2) bildenden Teiles anlegt sowie aus einer rohrförmigen Zentrierschale (52), die auch im wesentlichen konisch ausgebildet ist und fest mit der Tragfläche (53) verbunden ist und die kreisförmige Aufnahme (48, 49) trägt.

16. Mast-Nabeneinheit nach einem der Ansprüche 1 bis 15, dadurch gekennzeichnet, daß Befestigungen (31), die in ihrer Anzahl der Anzahl der Paare der Öffnungen entsprechen und jeweils dazu bestimmt sind, das innere Ende eines elastischen und vom Flügelblatt des Rotors nachgezogenen, dämpfenden Steuerorganes (58) an der Mastnabe (1) anzukuppeln, jeweils mit einem Sockel (32) an der Außenseite des die Nabe (3) bildenden Körpers oder des Gürtels (6) befestigt sind, und zwar auf einer axialen Höhe, die im wesentlichen zwischen den beiden Öffnungen (10, 11) der Paare von Öffnungen liegt, wobei sich der Sockel (32) in Umfangsrichtung auf dem Umfang des die Nabe (3) bildenden Teiles oder des Gürtels (6) jeweils zwischen zwei benachbarten Paaren von Öffnungen erstreckt.

17. Mast-Nabeneinheit nach einem der Ansprüche 1 bist 16, dadurch gekennzeichnet, daß der Fuß (4) des den Mast (2) bildenden Teiles mit einem Verbindungsbeschlag (37) und mit einer Einbau- und Drehantriebsvorrichtung für die Mastnabe (1) auf einem Getriebe verbolzt ist.

18. Rotorkopf für den Rotor eines Drehflüglers, bei dem eine Mast-Nabeneinheit (1) vorgesehen ist, die um eine Rotorachse (A) durch den einen ihrer, einen Mast (2) bildenden Teile in Drehbewegung versetzt wird und die einen Teil aufweist, der einen Nabenkörper (3) bildet, an dem die Flügelblätter des Rotors jeweils durch ein gabelförmiges Befestigungsteil (19) mit zwei Armen (20, 21) angebracht sind und an dem einerseits Halte- und Anlenkmittel (13) mit einem äußeren Beschlag (14) an dem den Nabenkörper (3) bildenden Teil befestigt sind und wobei ein innerer Beschlag (16) an den inneren Enden der beiden Arme (20, 21) befestigt ist und andererseits ein nachgezogenes, elastisches und dämpfendes Steuerorgan vorgesehen ist, dessen Enden über Kugelgelenke an einem der gabelförmigen Befestigungsteile (19) des zugeordneten Flügelblattes und der andere (57) an einem Punkt des den Nabenkörper bildenden Teiles angelenkt sind, dadurch gekennzeichnet, daß die Mast-Nabeneinheit (1) eine Mastnabe nach einem der Ansprüche 1 bis 17 ist, daß die Halte- und die Anlenkmittel (13) im Inneren des den Nabenkörper (3) bildenden Teiles untergebracht sind und daß jeder der beiden Arme (20, 21) eines gabelförmigen Befestigungsteiles (19) eine der beiden Öffnungen (10, 11) eines Paares von Öffnungen durchdringt, zwischen denen die Halte- und Anlenkmittel (13) durch Anlage ihres äußeren Beschlages (14) am Befestigungsgürtel (6) oder an dem den Nabenkörper bildenden Teil befestigt sind.

19. Rotorkopf nach Anspruch 18, dadurch gekennzeichnet, daß die Halte- und Anlenkmittel durch einen aus Schichten aufgebauten kugelförmigen Anschlag (13) gebildet sind, der im Inneren des den Nabenkörper (3) bildenden Körpers so befestigt ist, daß sein Rotationszentrum sich praktisch innerhalb der Dicke des den Nabenkörper (3) bildenden Teiles oder des Gürtels (6) zwischen den beiden korrespondierenden Öffnungen (10, 11) befindet.

20. Rotorkopf nach einem der Ansprüche 18 und 19, dadurch gekennzeichnet, daß der äußere Beschlag (14') der Halte- und Anlenkmittel (13') für jedes Flügelblatt nach außen von einem Bügel (44) gebildet ist, der den Verstärkungsgürtel (6) und den Teil (12) des den Nabenkörper (3) bildenden Teiles zwischen den beiden korrespondierenden Öffnungen (10, 11) überdeckt und daß ein Deckel (45) auf die Außenseite des Gürtels (6) oder auf den Teil (12) des den Nabenkörper (3) bildenden Körpers aufgesetzt und mit dem Bügel (44) verschraubt ist, so daß die zugeordneten Halte- und Anlenkmittel (13') in ihrer Lage im Inneren des den Nabenkörper (3) bildenden Teiles gehalten sind.

21. Rotorkopf nach einem der Ansprüche 18 bis 20, der mit einer Mast-Nabeneinheit nach einem der Ansprüche 13 bis 15 ausgerüstet ist, dadurch gekennzeichnet, daß ein festes Endstück (23) vorgesehen ist, das sich zum Zweck der Begrenzung der Schlagbewegungen eines Flügelblattes nach unten an einen Gegenring (24) anlegen kann, an einem der Arme (20) des gabelförmigen Befestigungsteiles (19) des zugeordneten Flügelblattes mit zwei Bolzen (22) angebracht ist, welche die Befestigung der inneren Enden der beiden Arme (20, 21) dieses gabelförmigen Befestigungsteiles (19) an dem inneren Beschlag (16) der zugeordneten Halte- und Anlenkmittel (13) sichert.

22. Rotorkopf nach einem der Ansprüche 18 bis 21, der mit einer Mast-Nabeneinheit nach dem Anspruch 16 ausgerüstet ist, dadurch gekennzeichnet, daß für jedes Rotorflügelblatt das nachgezogene, elastische und dämpfende Steuerorgan (58) an der Außenseite des den Nabenkörper (3) bildenden Teils angebracht ist, und zwar zwischen einem der an der Außenseite dieses den Nabenkörper (3) bildenden Teiles befestigten Anlenkbeschläge (31) und einem Anlenkbeschlag, der an dem gabelförmigen Befestigungsteil (19) des zugeordneten Flügelblattes getragen ist.

23. Rotorkopf nach Anspruch 22, dadurch gekennzeichnet, daß für jedes Rotorblatt auch ein Steuerhebel (34) für den Trimm des Flügelblattes vorgesehen ist, der an dem zugeordneten gabelförmigen Befestigungsteil (19) auf der dem Steuerorgan (58) gegenüberliegenden Seite und auf der Außenseite des den Nabenkörper (3) bildenden Teiles befestigt ist.

24. Rotorkopf nach einem der Ansprüche 18 bis 23, dadurch gekennzeichnet, daß der gabelförmige Befestigungsteil (19) jedes Flügelblattes einteilig mit dem Fuß des Flügelblattes ausgebildet ist.

25. Rotorkopf nach einem der Ansprüche 18 bis 23, dadurch gekennzeichnet, daß der gabelförmige Befestigungsteil jedes Flügelblattes von einem muffenartigen Befestigungsarm (39) gebildet ist, der im wesentlichen radial verläuft und an seinem inneren Ende als eine Kappe ausgestaltet ist, deren beide Arme (40, 41) an dem inneren Beschlag (16) der zugeordneten Halte- und Anlenkmittel (13') befestigt ist, und der an seinem äußeren Ende als eine Befestigungskappe am Fuß des zugeordneten Flügelblattes (38) mit zwei im wesentlichen parallel zur Rotationsachse (A) des Rotors verlaufenden Achsen ausgebildet ist, von denen eine abnehmbar ist, um das Einfalten des Flügelblattes durch Verschwenken um die andere Achse zu ermöglichen.

## Claims

1. Mast hub unit for the rotor of a rotor craft of the type comprising a tubular mast forming part (2) of which one end is shaped into a foot (4) by which the mast hub unit (1) is designed to be entrained in rotation around the axis (A) of the mast forming part (2), which part is integral on the side opposite the foot (4) with a part forming a hub body (3) coaxial to the mast forming part (2) and designed to be connected to the blades of the rotor via an elastic bearing characterised in that the part forming the hub body (3) is likewise a tubular part which prolongs the mast forming part (2), in that pairs of openings (10, 11), of number equal to the number of blades of the rotor, are provided in the hub body forming part (3) and are regularly spaced in the circumferential direction around the periphery of this hub body forming part (3), the two openings (10, 11) of each pair being axially spaced one from another, in that a reinforcing belt (6) is mounted on the internal or external face of this hub body forming part (3) between the two openings (10, 11) of each pair and in that the foot of each blade is shaped into attachment portions as forks with two superimposed branches (20, 21; 40, 41; 40', 41'), the upper branch of which crosses the upper opening (11, 11') and the lower branch of which crosses the lower opening (10, 10'), the internal radial ends of the two branches being fixed against the internal armature of a spherical abutment (13, 13') which is arranged against the belt (6) or against the internal face of the hub forming portion (3) in line with the belt (6).

2. Mast hub unit according to claim 1, characterised in that the ends of the openings in the circumferential direction, the closest on the one hand (10) and the most distant (11) on the other hand from the mast forming part (2), are located substantially and respectively in a first and in a second transverse plane (P₁, P₂) perpendicular to the axis (A) of the mast hub (1).

3. Mast hub unit according to one of claims 1 and 2, characterised in that the two openings (10, 11) of each pair substantially have the shape of a bean and have their concavities turned one towards the other.

4. Mast hub unit according to one of claims 1 to 3, characterised in that the mast forming part (2) and the hub body forming part (3) are formed by a single tubular piece (1) having a rotational symmetry and in that the two openings (10, 11) of each pair of openings are symmetrical one to the other with respect to a median plane M of the reinforcing belt (6) which is perpendicular to the axis (A) of the mast hub.

5. Mast hub unit according to one of claims 1 to 4, characterised in that the reinforcing belt (6) has an external lateral surface substantially in the form of a circular ring and a lateral internal surface substantially in the form of a polygonal section ring.

6. Mast hub unit according to one of claims 1 to 5 characterised in that at least the mast forming part (2) has a substantially general exterior shape of a frusto cone diverging from the foot (4) of this part towards the hub body forming part (3).

7. Mast hub unit according to claim 6, characterised in that the mast forming part (2), hub body forming part (3) and reinforcing belt (6) are metallic and in a single piece.

8. Mast hub unit according to claim 6, characterised in that the mast forming parts (2), hub body forming part (3) and reinforcing belt (6) being metallic, the hub body forming part (3) has a general exterior shape substantially cylindrical or frustoconical diverging from its end (5) opposite the mast forming part (2) and the reinforcing belt (6) is a circular ring fixed to the hub body forming part (3) against the internal or external face of this part and between the two openings of each pair of openings (10, 11).

9. Mast hub unit according to claim 6, characterised in that the mast forming part (2), hub body forming part (3) and reinforcing belt (6) are effected as a single piece in composite material of high mechanical resistance fibres connected together by a hardened synthetic resin.

10. Mast hub unit according to claim 9, characterised in that the reinforcing belt (6), made of composite material formed of synthetic or mineral unidirectional fibres having a high mechanical resistance held together by hardened synthetic resin, is made by winding of the said fibres and subsequent fixture to the hub body forming part (3) against the internal or external face of this part and between the two openings of each pair of openings (10, 11).

11. Mast hub unit according to one of claims 1 to 10, characterised in that the hub body forming part (3) has substantially a general convex exterior shape.

12. Mast hub unit according to claim 11, characterised in that the hub body forming part (3) has substantially the form of a barrel of maximum diameter at the level of the belt (6).

13. Mast hub unit according to one of claims 1 to 12, characterised in that a rigid counter ring (24) designed to constitute a bottom abutment limiting the flapping of the blades of the rotor towards the bottom is mounted laterally sliding in a circular seating in the form of a U opening radially outwardly (25, 27) and maintained by a support (29) coaxially to the mast hub (1) and at the interior of this latter at an axial level located between the mast forming part (2) and the openings (10) closer to this mast forming part (2).

14. Mast hub unit according to claim 13, characterised in that the circular seating support in U-shape (25, 27) has a frustoconical portion (29) internal to the part forming the hub body (3) and which carries the circular seating (25, 27) at the level of its small base while its large base is extended by a widening out and turned back portion (30) at the exterior of the hub body forming part (3) extending above the free edge (5) of this part to which the support is fixed.

15. Mast hub unit according to claim 13, characterised in that the circular seating support in the form of a U (48, 49) is a support comprising a substantially frustoconical tubular bearer support (53) against the internal face of the mast forming part (2) and a tubular centring web (52) likewise substantially frustoconical which is integral with the bearer mounting (53) and which supports the circular seating (48, 49).

16. Mast hub unit according to one of claims 1 to 15, characterised in that attachments (31) in number equal to the number of pairs of openings and each designed for coupling to the mast hub (1) of the inner end of an elastic return element and damper (58) drawn by one rotor blade are each fixed by a flange (32) against the external face of the hub body forming part (3) or of the belt, (6) at an axial level located substantially between the two openings (10, 11) of the pairs of openings and the flange (32) extends circumferentially around the periphery of the part forming the hub body (3) or of the belt (6) between two adjacent pairs of openings (17).

17. Mast hub unit according to one of claims 1 to 16, characterised in that the foot (4) of the mast forming part (2) is bolted at a joining ferrule (37) to a fitting and entraining unit for rotating the mast hub (1) on a transmission box.

18. Rotor head for the rotor of a rotor craft of the type comprising a mast hub unit (1) designed to be entrained in rotation around the axis of the rotor (A) by one of its parts forming a mast (2) and having a hub body forming part (3) and to which the blades of the rotor are each connected by a forked attachment part (19) with two branches (20, 21) and by the intermediary of, on the one hand, elements for retention and articulation (13) of which an external reinforcement (14) is fixed to the part forming the hub of body (3) and of which an internal reinforcement (16) is fixed to the internal ends of the two branches (20, 21) and, on the other hand, of an elastic return and trailing damper element (58), the ends of which are connected by pivots one on the forked attachment part (19) of the corresponding blade and the other (57) to a point on the hub body forming part (3) characterised in that the mast hub unit (1) is a mast hub unit according to one of the preceding claims 1 to 17, the retention and articulation elements (13) being located in the interior of the hub body forming part (3) and each of the two branches (20, 21) of a forked attachment part (19) crossing one of the two openings (10, 11) of a pair of openings between which these retaining and articulation elements (13) are fixed bearing by their external reinforcement (14) against the reinforcing belt (6) or the hub body forming part.

19. Rotor head according to claim 18, characterised in that for each blade the retaining and articulation elements are formed by a laminated spherical abutment (13) fixed to the interior of the hub body forming part (3) in such fashion that its centre of rotation is located practically in the thickness of the hub body forming part (3) or of the belt (6) between the two corresponding openings (10, 11).

20. Rotor head according to one of claims 18 and 19, characterised in that the external reinforcement (14') of the retaining and articulating elements (13') for each blade is shaped towards the exterior into a stirrup (44) which caps the reinforcing belt (6) and the portion (12) of the hub body forming part (3) which is bounded between the corresponding two openings (10, 11) and a cover piece (45) applied against the external face of the belt (6) or of this portion (12) of the hub body forming part (3) and screwed on to the stirrup (44) holding the corresponding holding and articulation elements (13) in place at the interior of the part forming the hub body (3).

21. Rotor head according to one of claims 18 to 20, provided with a mast hub unit according to one of the preceding claims 13 to 15 characterised in that a rigid claw (23) designed to come to apply against the counter ring (24) with the object of limiting the flapping of a blade downwardly is fixed to one of the branches (20) of the fork attachment part (19) of the corresponding blade by two bolts (22) which ensure the fixing of the internal ends of the two branches (20, 21) of this forked attachment part (19) to the internal reinforcement (16) of the corresponding holding and articulation elements (13).

22. Rotor head according to one of claims 18 to 21, provided with a mast hub unit according to the preceding claim 16 characterised in that, for each blade of the rotor, the elastic return and trailing damping element (58) is mounted on the exterior of the hub body forming part (3) between one of the coupling attachments (31) fixed against the external face of this hub body forming part (3) and a coupling attachment carried by the forked attachment part (19) of the corresponding blade.

23. Rotor head according to claim 22, characterised in that it comprises likewise for each blade of the rotor a command lever (34) for incidence of the blade which is fixed on the corresponding forked attachment part (19) on the side opposite the return element (58) and on the exterior of the hub body forming part (3).

24. Rotor head according to one of claims 18 to 23, characterised in that the forked attachment part (19) of each blade is integral with the foot of the blade.

25. Rotor head according to one of claims 18 to 23, characterised in that the forked attachment part for each blade is an attachment sleeve (39) substantially radial shaped at its internal end as a box of which the two branches (40, 41) are fixed to the internal reinforcement (16) of the corresponding retention and articulation elements (13') and shaped at its outer end as a fixing box to the foot of the corresponding blade (38) by two axes substantially parallel to the axis (A) of rotation of the rotor and which one is movable with the object of permitting the flexing of the blade by pivotting about the other axis.

FIG.1

FIG.3

FIG.2

FIG.5

FIG.4

5

FIG.6

EP 0 211 740 B1

FIG.7

41′  5′

11′

12′

44

10′

40′

FIG.8

31  57  58

6

48  24

11′

22

41′

7  41′  3′  39′

9  34′

31

41′

5′